# EUROPÄISCHE PATENTSCHRIFT

(11) **EP 0 369 063 B1**
(45) Veröffentlichungstag und Bekanntmachung des Hinweises auf die Patenterteilung: **08.03.1995**
(21) Anmeldenummer: 88121925.7
(22) Anmeldetag: 31.12.1988
(51) Int. Cl.: E04B 1/68, B29C 47/02, E02D 31/04

(54) **Fugenband für den Hoch- und Tiefbau, sowie Verfahren zu seiner Herstellung und Einrichtung zur Ausübung des Herstellungsverfahrens**
Expansion element for construction and civil engineering work, method of making same and device to perform the method
Joint de dilatation pour le bâtiment et génie civil, ainsi que procédé de fabrication et dispositif de mise en oeuvre du procédé

(30) Priorität: 18.11.1988 DE 3839075
(43) Veröffentlichungstag der Anmeldung: 23.05.1990
(73) Patentinhaber: BESAPLAST BENTLER GMBH, D-46325 Borken (DE)
(72) Erfinder: Bentler, Eleni, D-4280 Borken (DE)
(74) Vertreter: Herrmann-Trentepohl, Werner, Dipl.-Ing.

(56) Entgegenhaltungen:
- EP-A- 0 022 500
- CH-A- 398 019
- DE-A- 2 303 008
- DE-A- 3 011 225
- DE-B- 2 548 004

## Beschreibung

Die Erfindung betrifft ein Fugenband für den Hoch- und Tiefbau aus thermoplastischem Werkstoff gemäß dem Oberbegriff des Patentanspruches 1. Ferner bezieht sich die Erfindung auf ein Verfahren zur Herstellung dieses Fugenbandes und auf eine Einrichtung, mit der das Verfahren durchgeführt werden kann.

DE-A-2 303 008 beschreibt ein Fugenband, das parallel zu den Bandlängskanten angeordnete Längsstäbe aufweist und in Querrichtung durch von Rand zu Rand reichende Spannbügel stabilisiert wird. DE-B-2 548 004 offenbart einen Fugendichtungsstrang mit einer internen Stabilisierung durch einen quer hin und her verlaufenden Metalldraht und längsliegende Fasern.

Fugenbänder dienen im Hoch- und Tiefbau zum sperren von Fugen hauptsächlich gegen zusitzendes Wasser oder Feuchtigkeit. Solche Fugen entstehen z.B. zwischen dem Fundament und der aufgehenden Wand eines Gebäudes. Im allgemeinen werden solche Fugenbänder in der Fugenmitte angeordnet und zu diesem Zweck in der Schalung festgelegt, in der eines oder beide an der Fuge zusammengeführten Betonbauteile hergestellt werden. Handelt es sich z.B. um das Fundament, so wird das Fugenband mit einer Randkante in den weichen Beton eingedrückt, so daß es mit der gegenüberliegenden Randkante freibleibt. Diese ragt nach dem Härten des Fundamentbetons in die Schalung der aufgehenden Wand und wird bei deren Füllung von dem Beton überschüttet. Hierbei muß dafür gesorgt werden, daß die überschüttete Randkante des Fugenbandes nicht ausweicht, um zu verhindern, daß örtlich zusitzendes Wasser die Fuge überspringen kann.

Diese Gefahr besteht insbesondere bei unbewehrten Fugenbändern. Solche Bänder werden deswegen mit der schalung bzw. der Betonbewehrung verrödelt. Dabei dienen an dem Band anzubringende Klammern zum Anschluß der Rödeldrähte. Wegen der aufwendigen und unzuverlässigen Arbeiten verwendet man bewehrte Fugenbänder, die durch ihre Querstäbe steif und dadurch ihre Armierung gegen Ausknicken gesichert sind. Die Querstäbe müssen dazu eine ausreichende Biegefestigkeit aufweisen und bestehen deswegen in aller Regel aus Rund- oder aus Flachstahlabschnitten. Wenn man solche Querstäbe an dem Fugenband außen anklammert, besteht die Gefahr, daß die Armierung rostet. Deswegen sind die Querstäbe in dem Fugenband gemäß der Erfindung einschließlich ihrer Enden eingeschlossen.

Solche Fugenbänder sind prinzipiell komplizierter als unbewehrte Fugenbänder herzustellen, was einfach daran liegt, daß zwei unterschiedliche Werkstoffe, nämlich der Kunststoff des Bandmaterials und der Werkstoff, welcher für die Armierung in Betracht kommt, also vorzugsweise Stahl miteinander verbunden und die aus den unterschiedlichen Werkstoffen bestehenden Teile in der vorgegebenen, gegenseitigen Zuordnung zusammengeführt und miteinander vereinigt werden müssen.

Die Erfindung geht deshalb von einem fortgeschrittenen Fugenband und einem zu seiner Herstellung geeigneten Verfahren aus, wobei beides druckschriftlich vorbekannt ist (DE-OS 29 26 581). Bei dem vorbekannten Verfahren wird das Fugenband symmetrisch zur Banddicke in zwei Teilströmen extrudiert und die Bewehrungsstäbe werden zwischen die Teilströme in einer mit der Extrudergeschwindigkeit synchronisierten Taktfolge eingeführt. Danach werden die Teilströme hinter jedem eingeführten Querstab mit Hilfe eines Vakuums zusammengeführt, wobei die Teilströme sich zu einer Einheit verschmelzen.

Hierbei haben sich allerdings Schwierigkeiten daraus ergeben, daß das als Bandmaterial eingesetzte PVC (Polyvinylchlorid) nach dem Austreten des Bandes aus einer Breitschlitzdüse des dem Extruder nachgeschalteten Werkzeuges schrumpft, sobald es abkühlt. Da die Querstäbe diese Bewegung nicht mitmachen, verlaufen die Kanten des Fugenbandes wellenförmig, das deswegen keine konstante Breite aufweist. Das ist nicht nur optisch nachteilig, sondern zwingt zu geringen Querstababständen und fördert die Gefahr des Umknickens des Bandes in der Schalung.

Der Erfindung liegt als Aufgabe die Schaffung eines Fugenbandes zugrunde, das sich einfach herstellen und auf der Baustelle praktisch verwenden läßt, sowie unabhängig von dem Schrumpfverhalten des zu seiner Herstellung verwendeten Kunststoffes eine konstante Breite aufweist.

Zur Lösung des Problems eines Fugenbandes konstanter Breite bei praktischerer Verwendung auf der Baustelle dienen die Merkmale des Anspruches 1. Die Längsstäbe der Armierung hindern nämlich in den Abständen zwischen den Querstäben die Verformung der Bandkanten nach innen, so daß die bisherigen Wellungen nicht mehr auftreten und das Band eine konstante Breite aufweist. Infolgedessen ist die Gefahr eines Umknickens des Bandes an der Baustelle durch die bisherige nachteilige Ausbildung des Fugenbandes beseitigt. Da die Längsstäbe die Bandkanten bewehren und ihre Bewehrung ebenso wie die Querstäbe in das Fugenbandmaterial eingebettet ist, sind auch die Längsstäbe gegen Korrosion gesichert. Ein solches Fugenband läßt sich auf der Baustelle praktisch verwenden und hinterläßt einen günstigen optischen Eindruck.

Die Erfindung bietet außerdem die Möglichkeit, den praktischen Einsatz des neuen Fugenbandes noch weiter zu erleichtern, indem sie das gesonderte Anbringen der Klammern an den Bandkanten auf der Baustelle überflüssig macht. Solche Klammern werden auch an bewehrten Fugenbändern benötigt u. a., um das Band auszurichten und an der Bandarmierung vorbeizuführen. Hierzu weisen erfindungsgemäß die Längsstäbe Durchbrechungen auf, die als freiliegende Ösen dienen.

Das erfindungsgemäße Fugenband ermöglicht eine kalt hergestellte Verbindung der Querstabenden mit den Längsstäben und erlaubt damit, Kunststoffe für die Querstäbe einzusetzen.

Die Erfindung betrifft ferner ein Verfahren zu Herstellung eines Fugenbandes mit den Merkmalen des Anspruches 2. Hierbei wird das vorbekannte Herstellungsverfahren so geführt, daß man einerseits das Vakuum aufrechterhalten kann, welches die beiden Teilströme zu einer Einheit zusammenführt und andererseits die Längsstäbe einbringt, ohne das Vakuum zu stören. Das gelingt dadurch, daß man hinter jedem Querstab der fertigen Armierung den unter Unterdruck zu setzenden Raum im Werkzeug abschließt, die Längsstäbe aber in das noch weiche Material der Einheit eindrückt, so daß der Werkstoff des Bandes das Vakuum nach außen abdichtet.

Die Herstellung der Armierung aus den Quer- und Längsstäben geschieht zweckmäßig unmittelbar vor dem Extrudieren des Bandes. Das ist Gegenstand des Anspruches 3, der von schweißbaren Quer- und Längsstäben ausgeht. Dagegen sind die Merkmale des Anspruches 4 für ein Herstellungsverfahren vorgesehen, bei dem die Querstabenden kraftschlüssig mit den Längsstäben verbunden sind und diese Verbindung kalt ausgeführt wird.

In den Herstellungsvorgang des Bandes läßt sich jedoch nicht nur die Fertigstellung der Armierung, sondern auch die Herstellung der Ösen einbeziehen. Das ist zweckmäßig, weil die Ösenherstellung im Takt der Querstabeinführung erfolgen kann, um Ösen im regelmäßigen Abstand an einer oder beiden Längskanten des Bandes anordnen zu können.

Das erfindungsgemäße Fugenband, eine Einrichtung zur Durchführung des beschriebenen Verfahrens, sowie mehrere Ausführungsformen des mit dem erfindungsgemäßen Verfahren hergestellten Fugenbandes ergeben sich aus der nachfolgenden Beschreibung anhand der Figuren in der Zeichnung; es zeigen
- Fig. 1: in perspektivisch abgebrochener Darstellung ein erfindungsgemäß hergestelltes teilweise im Schnitt,
- Fig. 2: eine Einzelheit, die in Fig. 1 bei II wiedergegeben ist,
- Fig. 3: in Fig. 1 entsprechender, jedoch ebenfalls abgebrochener Darstellung ein weiteres erfindungsgemäß hergestelltes Fugenband,
- Fig. 4: in Fig. 3 entsprechender Darstellung eine abgeänderte Ausführungsform eines erfindungsgemäß hergestellte Fugenbandes,
- Fig. 5: in den Fig. 3 und 4 entsprechender Darstellung eine Ausführungsform des Fugenbandes der Erfindung und
- Fig. 6: in perspektivischer Darstellung den wesentlichen Teil der Einrichtung, mit der das Fugenband gemäß der Erfindung hergestellt wird.

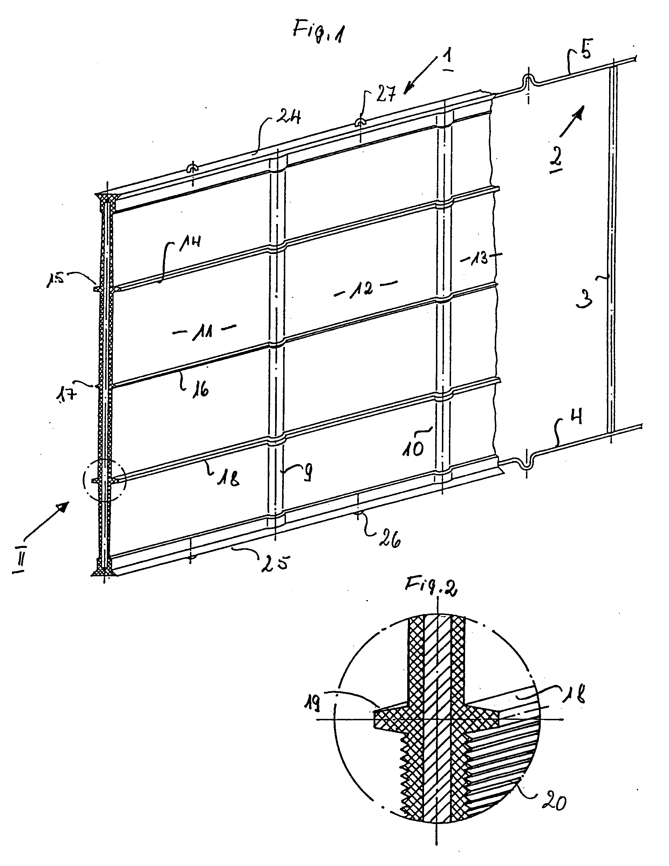

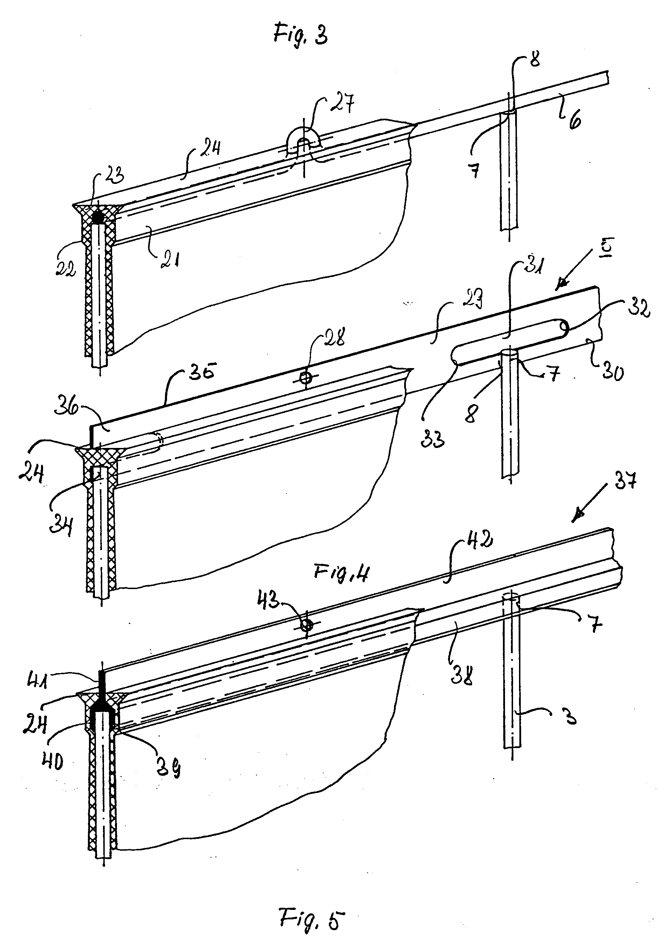

In dem Ausführungsbeispiel nach den Fig. 1 bis 3 ist ein zur Verwendung im Hoch- und Tiefbau bestimmtes Fugenband (1) aus thermoplastischem Werkstoff, z.B. aus PVC wiedergegeben. Es weist eine Bewehrung (2) aus Querstäben (3) und parallelen Längsstäben (4, 5) auf. Wie sich aus den in Fig. 3 wiedergegebenen Einzelheiten ergibt, sind die Längsstäbe (4, 5) einheitliche Rundstäbe (6), die mit den Enden (7) an den Innenseiten der Rundstäbe anliegen und mit diesen bei (8) punktverschweißt sind. Die Armierung (2) besteht aus einer Vielzahl von Querstäben (3), welche in regelmäßigen Abständen voneinander an den Längsstäben (4, 5) befestigt sind und das Band (1), wie bei (9 und 10) dargestellt, auftragen. Dazwischen befinden sich querstabfreie Bandabschnitte (11-13).

Das Band ist profiliert. Es weist in allen Ausführungsbeispielen auf beiden Seiten Längsrippenpaare (14, 15; 16, 17; 18, 19) auf. Zwischen den Längsrippenpaaren kann das Band parallel zu den Rippen geriffelt sein, was sich aus der Darstellung der Fig. 2 bei (20) ergibt.

Die Bandkanten sind ebenfalls einheitlich profiliert. Das Profil weist zwei verstärkte Schenkel (21, 22) auf, in das die Enden (7) der Querstäbe hineinragen. Die Schenkel sind mit einem beidseitig verbreiterten Steg (23) verbunden, in dem der jeweilige Längsstab (4, 5) liegt.

Aus der in den Fig 1 bis 3 wiedergegebenen Bewehrung (2) ergibt sich, daß durch die Anbringung der Querstäbe (3) mit ihren Enden (7) an den Längsstäben (4, 5) die zwischen den Querstäben verlaufenden Bandbereiche (11-13) ebenfalls bewehrt sind und zwar durch die Längsstäbe (4, 5), die parallel zu den Bandlängskanten (24, 25) verlaufen.

Jeweils in der Mitte zwischen zwei aufeinanderfolgenden Querstäben, etwa wie bei (9 und 10) in Fig. 1 dargestellt, sind aus den Längsstäben (4, 5) Ösen (26, 27) herausgebogen, die an den Bandlängskanten freiliegen. Alle übrigen Bereiche der Längsstäbe (4, 5) liegen in dem beschriebenen Profil und hinter den betreffenden Bandkanten (24, 25).

Während die Ösen (26, 27) beim Ausführungsbeispiel der Fig. 1 bis 3 aus Schlingen der Längsstäbe (4, 5) bestehen, handelt es sich beim Ausführungsbeispiel nach Fig. 4 um Bohrungen bzw. Ausstanzungen (28) aus einem Flachstahlprofil (29), welches hierbei für beide Längsstäbe (4, 5) Verwendung findet. Im Unterschied zu der zunächst erörterten Ausführungsform sind die Querstabenden auf eine Seite (30) des Flachstahles aufgelegt und bei (8) mit diesem verschweißt.

Außer den Bohrungen oder Stanzungen (28) weisen die Querstäbe (4, 5) im Ausführungsbeispiel nach Fig. 4 Durchbrechungen (29) auf, welche hauptsächlich zur Verbindung des auf beiden Seiten der Bewehrung (2) angeordneten Bandwerkstoffes dienen, um das Aufklaffen des Bandes an den Rändern zu verhindern. Die Durchbrechungen (31) sind schlitzfömig mit abgerundeten Enden bei (32, 33) und befinden sich in einem Randstreifen (34), der in den Bandwerkstoff eingebettet ist. Der auf der gegenüberliegenden Seite (35) befindliche Randstreifen (36) steht dagegen aus der Bandkante (24) nach außen vor. Dadurch ist der innenliegende Randstreifen (34) gegen Korrosion geschützt, während die als Ösen dienenden Bohrungen (28) freibleiben.

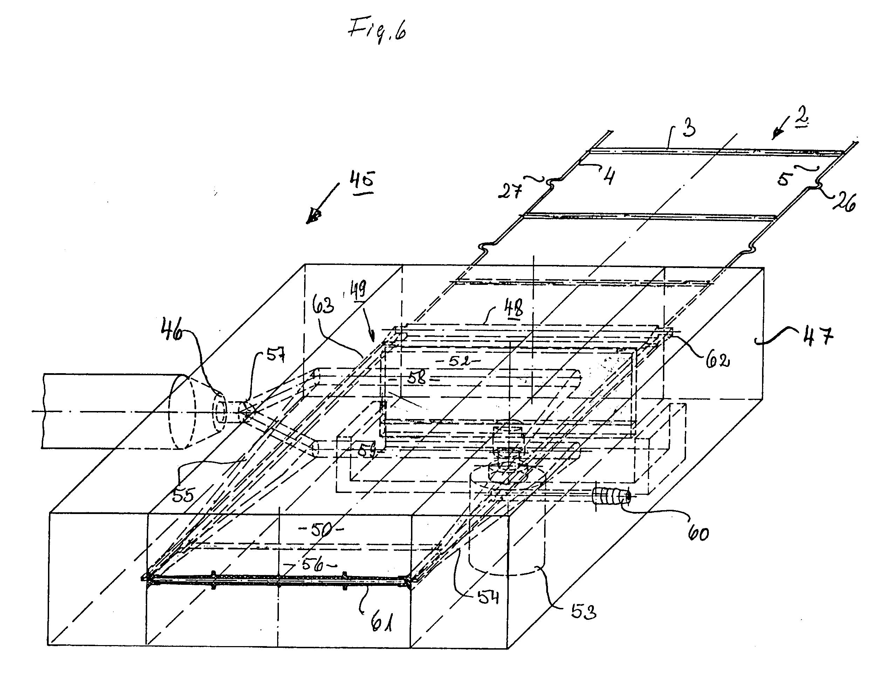

Im erfindungsgemäßen Fugenband der Fig. 5 wird ein Profil (37) aus Hart-PVC in beiden Längsstäben (4, 5) benutzt. Dieses Profil ist mit einem Randstreifen (38) in das Bandmaterial versenkt. Dieser Randstreifen weist ein etwa U-förmiges Profil auf, zwischen dessen Schenkel (39, 40) die Enden (7) der Querstäbe (3) eingeklemmt sind, so daß sie kraftschlüssig festgehalten werden. In der Mitte des Steges des U-Profiles steht ein Flachprofil (41) vor, welches mit dem U-Profil (39, 40) eine Baueinheit bildet. Aus dem Flachprofil besteht der Randstreifen (42), der über die Bandkante (24) vorsteht und Durchbrechungen (43) aufweist, welche als Ösen dienen. Kunststoffprofile verbinden sich mit dem Bandwerkstoff, so daß sich eine wirksame, jedoch relativ leichte Armierung ergibt.

Die beschriebenen Fugenbandausführungen lassen sich in der allgemein mit (45) in Fig. 6 bezeichneten Einrichtung herstellen. Der plastifizierte und mastifizierte Kunststoff, der das Bandmaterial bildet, tritt aus einer Runddüse (46) in ein Werkzeug (47) ein. Das Werkzeug weist einen sich nach außen erweiternden Einführungsschlitz (48) für die fertige Bewehrung (2) auf. An die Erweiterung schließt sich eine Querstablängsführung (49) an, welche aus einem Breitschlitz (50) besteht, der einlaufseitig mit einem im Takt auf- und zusteuerbaren Schieber (52) versehen ist. Zur Betätigung des Schiebers dient ein Arbeitszylinder (53) mit hin- und hergehendem Kolben, dessen Stange an der Unterkante der Schieberplatte (52) befestigt ist. Der Breitschlitz (50) mündet im Scheitel eines spitzen Winkels, den zwei weitere Breitschlitze (54, 55) einschließen, welche einer Breitschlitzdüse (56) den aus der Runddüse (46) austretenden Kunststoff in zwei Teilströmen zuführen, wo sie zu einer Einheit verschmelzen. Dazu dient ein Kanalsystem, welches aus zylindrischen Bohrungen besteht. Diese bilden einen V-förmigen Kunststoffverteiler (57) mit je einem jedem Breitschlitz (54, 55) zugeordneten Leitungszweig (58, 59).

Zur Zusammenführung dient ein Vakuum, welches über den Anschlußnippel (60) an den Breitschlitz (50) angelegt wird. Mit Hilfe des Schiebers (52) ist die Breitschlitzdüse (56) nach außen abgeschlossen.

Der Vakuumanschluß (60) sitzt zwischen der Mündung (61) der Breitschlitzdüse und der Schieberplatte (52). Die Schieberplatte sitzt ihrerseits zwischen je einer Längsführung (62, 63) welche Kanäle bilden, in denen die Längssstäbe (4, 5) und die Ösen (26, 27) der Breitschlitzdüse (56) zugeführt werden. Diese Teile gleiten in den noch weichen Kunststoff der Breitschlitzdüse (56), welcher das Vakuum gegen die Öffnung der Kanäle (62, 63) abdichtet.

Nicht dargestellt ist eine Abzugsvorrichtung für das aus der Einheit bestehende Fugenband, welches sich hinter einem Wasserbad befindet, das zwischen der Abzugsvorrichtung und der Öffnung (62) angeordnet ist und dazu dient, den heißen Bandkunststoff abzukühlen und aus seinem plastifizierten Zustand in die fertige Form zu überführen.

Im Betrieb wird der aus der Breitschlitzdüse (56) austretende Kunststoffstrom mit dem Verteiler (57) symmetrisch zur Banddicke in zwei Teilströme aufgeteilt, welche durch die beschriebenen Längsschlitze (54, 55) extrudiert werden. Die Stäbe (3) der Armierung (2) werden zwischen die Teilströme in einer mit der Extrudergeschwindigkeit synchronisierten Taktfolge eingeführt, was mit der nicht dargestellten Bandabzugsvorrichtung geschieht. Die Teilströme werden hinter jedem eingeführten Querstab (3) mit Hilfe des bei (60) angelegten Vakuums zusammengeführt, wobei die Teilströme zu einer Einheit verschmelzen.

Nicht dargestellt ist eine dem Werkzeug (47) vorgeschaltete Vorrichtung, welche an den vom Coil abgezogenen Rundstäben (4, 5) im vorgegebenen Abstand die Querstäbe (3) anpunktet und eine damit verbundene Vorrichtung, welche ebenfalls im Takt die Ösen (26, 27) aus den Querstäben herausbiegt.

Anstelle einer Punktschweißeinrichtung kann eine Vorrichtung verwendet werden, welche, wie im Zusammenhang mit dem erfindungsgemäßen Fugenband gemäß Fig. 5 beschrieben, die Querstabenden (7) in das Profil (39, 40) einklemmt.

Die aus den Querstäben (3) und den Längsstäben (4, 5) in der Form von Flachprofilen bestehende Armierung (2) läßt sich wickeln und kann daher bei der beschriebenen Fugenbandherstellung als Ganze von einem Coil abgewickelt werden.

## Patentansprüche

1. Fugenband (1) für den Hoch- und Tiefbau aus thermoplastischem Kunststoff mit einer Bewehrung (2), die eine Vielzahl von Querstäben (3) aufweist, welche in der Längendimension des Bandes (1) einen vorzugsweise regelmäßigen Abstand voneinander einhalten und in der Dickendimension des Bandes (1) vorzugsweise in der Bandmitte unter Umschließung ihrer Enden (7) mit dem Bandkunststoff untergebracht sind, dadurch gekennzeichnet, daß die Querstäbe (3) mit ihren Enden (7) an Längsstäben (37) angebracht sind, welche zur Bewehrung der zwischen den Querstäben (3) verlaufenden Bandabschnitte (11-13) dienen und parallel zu den Bandlängskanten (24, 25) angeordnet sind, wobei die Bewehrungslängsstäbe (37) aus Hart-PVC bestehen und einen profilierten und in den Bandwerkstoff eingebetteten Randstreifen (38) mit U-förmigem Profil aufweisen, der der kraftschlüssigen Verbindung der Querstabenden (7) dient und eine Baueinheit mit einem Flachprofil (41) bildet, welches Durchbrechungen (43) aufweist, die als freiliegende Ösen (26, 27) dienen.

2. Verfahren zur Herstellung eines Fugenbandes für den Hoch- und Tiefbau aus thermoplastischem Kunststoff mit einer Bewehrung (2), die eine Vielzahl von Querstäben (3) aufweist, welche in der Längendimension des Bandes (1) einen vorzugsweise regelmäßigen Abstand voneinander einhalten und in der Dickendimension des Bandes (1) vorzugsweise in der Bandmitte unter Umschließung ihrer Enden (7) mit dem Bandkunststoff untergebracht sind, wobei die Querstäbe (3) mit ihren Enden (7) an Längsstäben (4, 5) angebracht sind, welche zur Bewehrung der zwischen den Querstäben (3) verlaufenden Bandabschnitte (11-13) dienen und parallel zu den Bandlängskanten (24, 25) angeordnet sind, bei dem das Fugenband (1) symmetrisch zur Banddicke in zwei Teilströmen extrudiert und die Querstäbe zwischen die Teilströme in einer mit der Extrudergeschwindigkeit synchronisierten Taktfolge eingeführt und die Teilströme hinter jedem eingeführten Querstab (3) mit Hilfe eines Vakuums zusammengeführt werden, wobei die Teilströme zu einer Einheit verschmelzen, dadurch gekennzeichnet, daß die Querstäbe (3) an den Längsstäben (4, 5) angebracht und die fertige Bewehrung (2) zwischen die Teilströme eingeführt wird, wobei die Längsstäbe (4, 5) außerhalb des Vakuums in die verschmelzenden Teilströme eingeführt werden.

3. Verfahren nach Anspruch 2, dadurch gekennzeichnet, daß die Querstäbe (3) unmittelbar vor dem Einbringen der Bewehrungen (2) an die schweißbaren Längsstäbe (4, 5) angepunktet werden.

4. Verfahren nach Anspruch 2, dadurch gekennzeichnet, daß die Querstäbe (3) in die Profile (39, 40) der in das Band (1) eingebetteten Randstreifen (38) eingeklemmt werden.

5. Verfahren mach einem der Ansprüche 2 bis 3, dadurch gekennzeichnet, daß vor dem Einbringen der Querstäbe (3) Ösen (26, 27) in die aus Rundstahl bestehenden Längsstäbe (4, 5) im Takt der Querstabeinführung eingebogen werden.

6. Einrichtung zur Durchführung des Verfahrens nach einem der Ansprüche 2 bis 4 mit einem Werkzeug (47), welches den aus einem Extruder austretenden Strom symmetrisch in Teilströme zerlegt, einer Längsführung (50) für die eingeführte Bewehrung (2) zwischen die Teilströme und einer Breitschlitzdüse (56), aus der die Bandeinheit austritt, dadurch gekennzeichnet, daß die Längsführung (49) aus einem Schlitz (50), der einlaufseitig einen im Takt auf- und zugesteuerten Schieber (52) aufweist, hinter der Breitschlitzdüse (56) mündet und zwischen Mündung (61) und Schieber (52) einen Vakuumanschluß (60) aufweist, sowie aus je einem Längskanal (62, 63) besteht, der jeweils eine Seite des Schlitzes (50) abschließt und einen der Längsstäbe (4, 5) führt, wobei eine Bandabzugsvorrichtung zum Einbringen der Bewehrung (2) dient.

7. Einrichtung nach Anspruch 5, dadurch gekennzeichnet, daß der Schlitz (50) in einer Ebene verläuft, welche im Scheitel eines spitzen Winkels mündet, der die die Teilströme zu der Breitschlitzdüse (56) führenden Breitschlitze (54, 55) einschließen.

8. Einrichtung nach einem der Ansprüche 5 oder 6, gekennzeichnet durch eine V-förmige Zylinderkanalverzweigung (57) für den aus einer Runddüse (46) austretenden Extruderstrom, wobei die Zweige (58, 59) die Eingänge der die Teilströme führenden Breitschlitze (54, 55) bilden.

## Claims

1. Expansion element (1) for construction and civil engineering work, made from thermoplastic plastic material with a reinforcement (2) comprising a plurality of crossbars (3) keeping a preferably regular distance from one another in the longitudinal dimension of the element (1) and in the thickness direction of the element (1) being preferably arranged in the middle of the element with enclosure of its ends (7) with the plastic material of the element, **characterized in that** the crossbars (3) with their ends (7) are mounted at longitudinal bars (37) serving for reinfocement of the sections (11 - 13) of the element running between the crossbars (3) and being arranged in parallel to the longitudinal edges (24, 25) of the element, wherein the longitudinal reinforcement bars (37) are made from rigid PVC and have a profiled marginal strip (38) being embedded into the material of the element and showing a U-profile serving for positive lock of the crossbar ends (7) and forming a constructural unit with a flat bar (41) having through-openings (43) serving as uncovered eyelets (26, 27).

2. Process for manufacturing an expansion element for construction and civil engineering work, made from thermoplastic plastic material with a reinforcement (2) comprising a plurality of crossbars (3) keeping a preferably regular distance from one another in the longitudinal dimension of the element (1) and in the thickness direction of the element (1) being preferably arranged in the middle of the element with enclosure of its ends (7) with the plastic material of the element, wherein the crossbars (3) with their ends (7) are mounted at longitudinal bars (4, 5) which serve for reinforcement of the sections (11 - 13) of the element running between the crossbars (3) and are disposed in parallel to the longitudinal edges (24, 25) of the element, wherein the expansion element (1) is extruded in two partial streams symmetrically to the thickness of the element and the crossbars are introduced between the two partial streams in cycles synchronized with the extrusion speed and the partial streams are guided together behind each crossbar inserted (3) with the aid of vacuum, wherein the partial streams merge into one unit, **characterized in that** the crossbars (3) are mounted at the longitudinal bars (4, 5) and the finished reinforcement (2) is introduced between the two partial streams, wherein the longitudinal bars (4, 5) are introduced into the merging partial streams outside of the vacuum.

3. Process as defined in claim 2, **characterized in that** the crossbars (3) directly prior to the introduction of the reinforcement (2) are spot welded to the weldable longitudinal bars (4, 5).

4. Process as defined in claim 2, **characterized in that** the crossbars (3) are clamped into the profiles (39, 40) of the marginal stips (38) embedded into the element (1).

5. Process as defined in one of lcaims 2 to 3, **characterized in that** prior to inserting the crossbars (3) eyelets (26, 27) are bent into longitudinal bars (4, 5) made from round steel bars in the cycles of crossbar introduction.

6. Apparatus for carrying out the process as defined in claims 2 to 4 using a tool (47) separating the stream coming from an extruder symmetrically into partial streams, a longitudinal guide (50) for the introduced reinforcement (2) between the partial streams and a sheet die (56) from which the element unit emerges, **characterized in that** the longitudinal guide (4) consists of a slit (50) comprising a slider (52) being controlled for opening and closing in cycles on the intake side, ending behind the sheet die (56) and having a vaccum connection between port (61) and slider (52), as well as of one longitudinal channel each (62, 63) respectively closing one side of the slit (50) and guding one of the longitudinal bars (4, 5), wherein a band delivery means serves for inserting the reinforcement (2).

7. Apparatus as defined in claim 5, **characterized in that** the slit (50) extends in a plane ending in the angle point of a sharp angle enclosed by the sheet slots (54, 55) guiding the partial streams to the sheet die (56).

8. Apparatus as defined in one of claims 5 or 6, **characterized by** a V-shaped cylinder channel branching (57) for the extruder stream leaving from a round die (46), wherein the branches (58, 59) form the inlets for the sheet slits guiding the partial streams.

## Revendications

1. Bande couvre-joint en matériau thermoplastique pour le bâtiment et le génie civil, pourvue d'une armature (2) qui présente une pluralité de barres transversales (3) qui sont espacées de préférence régulièrement dans la direction longitudinale de la bande (1) et sont placées, dans la direction de l'épaisseur de la bande (1), de préférence dans la partie médiane de la bande (1) avec recouvrement de leurs extrémités (7) par la matière plastique du joint, caractérisé en ce que les extrémités des barres transversales (3) sont attachées à des barres longitudinales (37) qui servent à l'armature des portions de bande (11-13) s'étendant entre les barres transversales (3) et sont diposées parallèlement aux bords longitudinaux (24, 25) de la bande, les barres longitudinales d'armature (37) étant en PVC dur et présentant une bande latérale (38) profilée en U et noyée dans le matériau de la bande couvre-joint, laquelle sert à la liaison par adhérence aux barres transversales (7) et forme un ensemble avec un profilé plat (41) qui présente des évidements (43) faisant office d'ouvertures libres (26, 27).

2. Procédé de fabrication d'une bande couvre-joint en matériau thermoplastique pour le bâtiment et le génie civil, pourvue d'une armature (2) qui présente une pluralité de barres transversales (3) qui sont espacées de préférence régulièrement dans la direction longitudinale de la bande (1) et sont placées, dans la direction de l'épaisseur de la bande (1), de préférence dans la partie médiane de la bande (1) avec recouvrement de leurs extrémités (7) par la matière plastique de la bande, les extrémités des des barres transversales (3) étant attachées à des barres longitudinales (37) qui servent à l'armature des portions de bande (11-13) s'étendant entre les barres transversales (3) et sont diposées parallèlement aux bords longitudinaux (24, 25) de la bande, dans lequel la bande couvre-joint (1) est extrudée en deux écoulements partiels et les barres transversales sont mises en place entre les écoulements partiels suivant une cadence synchronisée avec la vitesse d'extrusion et les écoulements partiels sont réunis par aspiration derrière chaque barre transversale (3) mise en place, les écoulements partiels fusionnant en un ensemble, caractérisé en ce que les barres transversales (3) sont attachées aux barres longitudinales (4, 5) et l'armature (2) terminée est mise en place entre les écoulements partiels, les barres longitudinales (4, 5) étant mises en place dans les écoulements partiels en cours de fusion à l'extérieur de la zone d'aspiration.

3. Procédé selon la revendication 2, caractérisé en ce que les barres transversales (3) sont soudées par point, immédiatement avant la mise en place des armatures (2), aux barres longitudinales (4, 5) soudables.

4. Procédé selon la revendication 2, caractérisé en ce que les barres transversales (3) sont pincées dans les profilés (39, 40) des barres latérales (38) noyées dans la bande couvre-joint (1).

5. Procédé selon l'une des revendications 2 ou 3, caractérisé en ce qu'avant la mise en place des barres transversales (3), des boucles (26, 27) sont réalisées par pliage des barres longitudinales formées de ronds en acier, en suivant la fréquence de mise en place des barres transversales.

6. Dispositif pour la mise en oeuvre du procédé selon l'une quelconque des revendications 2 à 4, comprenant un outil (47) qui sépare symétriquement l'écoulement sortant d'une extrudeuse en écoulements partiels, un guide longitudinal (50) de l'armature (2) mise en place, et une filière plate (56) dont sort l'ensemble de bande, caractérisé en ce que le guide longitudinal (49) se compose d'une fente (50) qui présente, du côté de l'entrée, un coulisseau (52) actionné en cadence dans un sens et dans l'autre, qui débouche derrière la filière plate (56) et présente un raccordement d'aspiration (60) entre la sortie (61) et le coulisseau (52), ainsi que de deux canaux longitudinaux (62, 63) dont chacun ferme un côté de la fente (50) et guide l'une des barres longitudinales (4, 5), un dispositif convoyeur à bande servant à la mise en place de l'armature (2).

7. Dispositif selon la revendication 5, caractérisé en que la fente (50) s'étend dans un plan qui débouche au sommet d'un angle aigu qui contient les fentes (54, 55) dirigeant les écoulements partiels vers la filière plate (56).

8. Dispositif selon l'une des revendications 5 ou 6, caractérisé par un embranchement en forme de V d'un canal cylindrique d'écoulement d'extrusion provenant d'une filière circulaire (46), les branches (58, 59) formant les entrées des fentes (54, 55) produisant les écoulements partiels.
